## Europäisches Patentamt
## European Patent Office
## Office européen des brevets

(19)

(11) Veröffentlichungsnummer: **0 474 105 B1**

(12) **EUROPÄISCHE PATENTSCHRIFT**

(45) Veröffentlichungstag der Patentschrift: **26.10.94**

(51) Int. Cl.⁵: **G01C 21/16**

(21) Anmeldenummer: **91114424.4**

(22) Anmeldetag: **28.08.91**

(54) **Inertiales Navigationssystem mit Kompensationsfilter zu seiner Ausrichtung im Fluge.**

(30) Priorität: **30.08.90 DE 4027393**

(43) Veröffentlichungstag der Anmeldung:
**11.03.92 Patentblatt 92/11**

(45) Bekanntmachung des Hinweises auf die
Patenterteilung:
**26.10.94 Patentblatt 94/43**

(84) Benannte Vertragsstaaten:
**DE FR GB IT**

(56) Entgegenhaltungen:
**EP-A- 0 263 894**
**US-A- 4 402 049**

**IEEE 1985 NATIONAL AEROSPACE AND
ELECTRONICS CONFERENCE, Bd. 2, 20. Mai
1985, Dayton, Ohio, US, Seiten 1198-1205;
G.W. SWEARINGEN ET AL: "GPS aided inertial navigation"**

(73) Patentinhaber: **HONEYWELL AG**
**Kaiserleistrasse 39**
**D-63067 Offenbach (DE)**

(72) Erfinder: **Jacob, Heinrich, Prof. Dr.Ing.**
**August-Bebel-Strasse 10**
**W-6457 Maintal (DE)**

(74) Vertreter: **Herzbach, Dieter, Dipl.-Ing. et al**
**Honeywell Holding AG**
**Patent- und Lizenzabteilung**
**Postfach 10 08 65**
**D-63008 Offenbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die vorliegende Erfindung bezieht sich auf ein inertiales Navigationssystem nach dem Gattungsbegriff des Patentanspruches 1. Dieses Navigationssystem enthält ein Kompensationsfilter zur Ausrichtung des Navigationssystems im Fluge.

Inertiale Flugnavigationssysteme erlauben eine autonome und präzise Bestimmung der Lage (Roll-, Nick- und Kurswinkel), der Position (geographische Länge, Breite und Hohe) sowie der Geschwindigkeit (in Nord-, Ost- und "Down"-Richtung) eines Fluggerätes im Laufe einer Mission, die sich bis zu mehreren Stunden erstrecken kann (1-4). Vor ihrer Inbetriebnahme müssen diese Flugnavigationssysteme ausgerichtet werden, d. h., die Integratoren zur Berechnung der jeweiligen Komponenten der Lage, Position und Geschwindigkeit sind möglichst genau zu initialisieren.

Während bei einer Ausrichtung am Boden die Werte von Position und Geschwindigkeit eines Flugzeuges einfach zu bestimmen sind (Ort des Flughafens bekannt, Geschwindigkeit des Flugzeuges gleich Null während der Ausrichtung), gestaltet sich die Ermittlung der Lage des Fluggerätes vor Antritt einer Mission ziemlich schwierig und aufwendig. Als Information zur Berechnung der Roll-, Nick- und Azimut-Winkel stehen nämlich nur das Erdschwerefeld und die Drehgeschwindigkeit der Erde bezüglich des inertialen Fixsternsystems zur Verfügung, wobei darüber hinaus die entsprechenden Beschleunigungs- und Drehgeschwindigkeitssensoren relativ ungenaue und dazu stark verrauschte Daten liefern (5).

Zur Ermittlung der Anfangswerte - insbesondere für die Lage des Flugzeuges - müssen daher im Zusammenhang mit den erwähnten fehlerbehafteten Sensorsignalen dynamische Filter eingesetzt werden, die je nach geforderter Navigationsgenauigkeit nach Ablauf einer mehr oder weniger langen Ausrichtzeit von mindestens einigen Minuten die Berechnung akzeptabler Schätzwerte für die Initialisierung erlauben (6).

Ein bekanntes Verfahren zur Erlangung einer schnellen und präzisen Ausrichtung besteht in der Anwendung der Kalman-Filtertechnik. Voraussetzung dafür ist, daß die Systemdynamik hinreichend genau im mathematischen Filtermodell dargestellt wird und a-priori-Informationen über das Prozeßrauschen (stochastisches Verhalten der Inertialsensoren) und Meßrauschen (stochastische Beschreibung der Böen- und Beladevorgänge) vorhanden sind.

Das Prinzip der Kalman-Filterung besteht darin, daß parallel zum eigentlichen, hochgenauen, nichtlinearen Navigationssystem ein zusätzliches dynamisches, vereinfachtes lineares Fehlermodell betrieben wird, das neben den linearisierten Navigationsdiffentialgleichungen auch das stochastische Fehlerverhalten der Inertialsensoren beinhaltet. Die zeitabhängigen Rückführkoeffizienten dieses dynamischen Fehlermodells werden über die Kalman-Filtertheorie derart berechnet, daß die Fehlervarianzen (Lage, Position, Geschwindigkeit) in Abhängigkeit der als bekannt angenommenen Varianzen des Meßrauschens (Böen- und Belade-Effekte) und der Varianzen des Prozessrauschens (stochastische Fehler der Inertialsensoren) minimiert werden.

Als möglicherweise bessere Alternative zur bekannten Kalman-Filterung kann zur Ausrichtung von Navigationssystemen auch die "nichtlineare Beobachtung mit zeitabhängigen Rückführkoeffizienten" eingesetzt werden.

Ein Beobachter kommt ohne parallel betriebenes Fehlermodell aus und dürfte dennoch im Prinzip bessere Ergebnisse erbringen. Dies rührt daher, daß nicht ein zusätzliches lineares Fehlermodell, sondern das sowieso bereits vorhandene, hochpräzise Navigationssystem als Filter, als nichtlinearer Beobachter herangezogen wird, der wie bei der Kalman-Filterung mit zeitabhängigen Rückführkoeffizienten zu versehen ist. Die Berechnung dieser Zeitfunktionen geschieht dabei "off-line" über numerische Optimierungsverfahren (7).

Bei der Ausrichtung von Navigationssystemen im Fluge ergibt sich sowohl für die Kalman-Filterung als auch für die nichtlineare Beobachtung ein großes Problem in der Tatsache, daß die zu ermittelnden zeitabhängigen Rückführkoeffizienten nicht nur von der Zeit, sondern neben der aktuellen geographischen Breite auch von der augenblicklich geflogenen Geschwindigkeit in Ostrichtung und der momentan vorliegenden Beschleunigung, ebenfalls in Ostrichtung, abhängen (8).

Es ist daher die Aufgabe der vorliegenden Erfindung, ein inertiales Navigationssystem anzugeben, welches gewährleistet, daß auch bei einer Ausrichtung im Fluge sowohl für das Kalman-Filter als auch für den nichtlinearen Beobachter die Rückführkoeffizienten einmal für immer nur in Abhängigkeit von der Zeit und nicht von den sonstigen Umständen des Fluges berechnet werden müssen.

Die Lösung dieser Aufgabe gelingt gemäß den Merkmalen des Patentanspruches. Das erfindungsgemäße inertiale Navigationssystem erbringt für die Kalman-Filterung den Vorteil, daß die Linearisierung des Fehlermodells und die Berechnung der zeitabhängigen Rückführkoeffizienten nicht für jeden Flugzustand sondern nur einmalig, "off-line", durchzuführen ist (Ersparnis an Computer-Rechenzeit und Computer-Speicherplatz, Erhöhung der Betriebssicherheit durch die Anwendung wesentlich einfacher Algorithmen).

Was den Gebrauch eines nichtlinearen Beobachters für die Ausrichtung im Fluge anbelangt, so macht der Einsatz des erfindungsgemäßen Kompensationsfilters eine Inbetriebnahme eines derartigen Beobachters während des Fluges erst möglich. Auch hier kann die Berechnung der zeitabhängigen Rückführkoeffizienten einmal für immer "off-line" geschehen. Die somit gewonnenen Zeitverläufe dieser Rückführkoeffizienten haben dann - im Zusammenhang mit dem betrachtenden Kompensationsfilter - Gültigkeit für beliebige, auch veränderliche Flugzustände während aller später durchzuführenden Ausrichtvorgänge.

Anhand der Figuren der beiliegenden Zeichnung sei im folgenden das der Erfindung zugundeliegende Problem und seine Lösung näher beschrieben. Es zeigen:

Fig. 1      das Blockschaltbild eines bekannten Navigationssystems;

Fig. 2      den Signalflußplan bei einer Azimut-Fehlausrichtung;

Fig. 3      ein Blockschaltbild des erfindungsgemäßen Kompensationsfilters; und

Fig. 4      Signaldiagramme zur Veranschaulichung der Wirkungsweise des erfindungsgemäßen Kompensationsfilters.

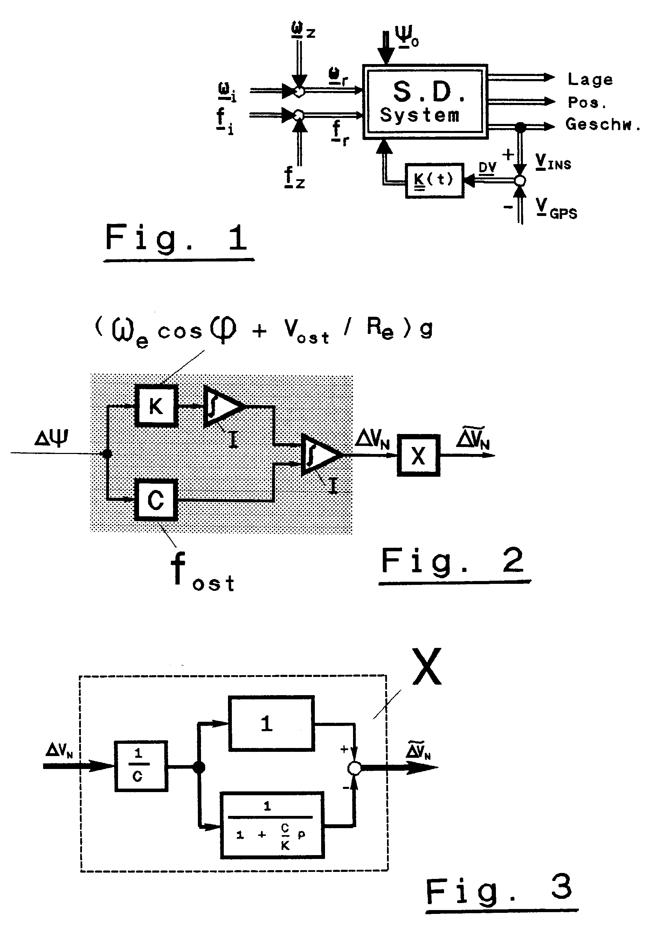

Fig. 1 zeigt ein bekanntes Navigationssystem, bei dem die idealen Sensorsignale, nämlich $\omega i$ für die Drehgeschwindigkeiten und $\underline{f}i$ für die Beschleunigungen eingezeichnet sind. Diese idealen Signale werden mit dem entsprechenden stochastischen "Prozess-Rauschen" $\omega z$ und $\underline{f}z$ verfälscht und ergeben die realen Signale $\omega r$ z.B. der inertialen Laserkreisel und $\underline{f}r$ z.B. der inertialen Pendelbeschleunigungsmesser. Diese realen, fehlerbehafteten Signale, die im inertialen, d. h. fixsternbezogenen Koordinatensystem zur Wirkung kommen, werden in das Navigationssystem eingebracht, in dem über komplizierte Koordinatentransformationen, Integrationsverfahren und Fehlerkompensationen die jeweils 3-dimensionalen Komponenten der Lage (Roll-, Nick- und Aziment-Winkel), der Position und die Geschwindigkeit im Laufe einer Flugmission berechnet werden, wobei diese Informationen nicht im inertialen, sondern in dem für die Piloten relevanteren geographischen, erdbezogenen Koordinatensystem geliefert werden.

Die heutigen Navigationssysteme werden auch, wie in Fig. 1 geschehen, mit "Strap-Down-System" bezeichnet (S.D. System), da die Sensoren nun nicht mehr auf einer kardanisch aufgehängten Plattform montiert, sondern mit dem Flugzeug fest verbunden ("strapped down") sind. Die Koordinatentransformationen werden dann nicht mehr mechanisch über Kardansysteme, sondern neuerdings per Mikroprozessor durchgeführt.

Wie bei jedem dynamischen Simulationssystem - und bei einem Navigationsgerät handelt es sich im Prinzip um ein derartiges System - müssen die Integratoren zu Beginn der Simulation initialisiert werden, d. h., die betrachtenten Zustände sind mit Anfangswerten zu versehen. Bei einer Inbetriebnahme des Gerätes am Boden können die Zustände der Position und der Geschwindigkeit - da bekannt - direkt eingegeben werden. Die Zustände der Lage (Roll-, Nick- und Kurswinkel, siehe Bezeichnung $\psi o$) müssen jedoch noch über den einige Minuten dauernden Ausrichtvorgang ermittelt werden. Dies geschieht dadurch, daß die Unterschiede $\underline{DV}$ der Geschwindigkeitssignale $\underline{V}$ INS des Inertialen Navigationssystems (INS) und der tatsächlichen Geschwindigkeit $\underline{V}$ GPS (am Boden identisch Null, im Fluge z. B. mit dem "Global Positioning System" -GPS- gemessen) über zeitabhängige Rückführkoeffizienten $\underline{K}$ auf die Integratoren des "Strap-Down"-Systems gebracht werden. über diesen verkoppelten mehrdimensionalen Regelkreis wird nun erreicht, daß das Koordinatensystem des Navigationsgerätes in das Koordinatensystem der tatsächlich vorliegenden Lage des Flugzeuges hineingedreht wird. Der Ausricht- bzw. Regelvorgang ist abgeschlossen, wenn die Geschwindigkeiten des "Strap-Down"-Systems (Navigationsgerät) mit den tatsächlichen Geschwindigkeiten (am Boden gleich Null) übereinstimmen. Die Ermittlung der optimalen zeitabhängigen Rückführkoeffizienten $\underline{K}$ (t) geschieht bei der Kalman-Filterung durch die Lösung des sog. Riccati-Differentialgleichungssystems (6) und bei der nichtlinearen Beobachtung durch den Einsatz von numerischen Optimierungsverfahren (7). Dabei bedeutet "optimal", daß der Ausrichtvorgang unter den gegebenen Umständen (Prozess-Rauschen der Sensoren, Meß-Rauschen der Geschwindigkeitsbestimmung, nämlich entweder durch Böen- und Beladeeinflüsse am Boden oder durch Meßfehler des GPS-Signals im Fluge) so schnell und so präzise wie möglich durchgeführt werden soll (Minimierung der Fehler-Varianzen).

Schwierigkeiten bei der Ausrichtung im Fluge ergeben sich dadurch (8), daß die optimale Ruckführmatrix $\underline{K}$ (t) nicht nur von der Zeit, sondern auch von der geographischen Breite $\phi$, von der Ostgeschwindigkeit $V_{ost}$ und von der Ostbeschleunigung $f_{ost}$ abhängig ist:

$$\underline{\underline{K}} \ (t) \ = \ f \ (t, \ \phi \ , \ V_{ost}, \ f_{ost}) \hspace{3cm} (1)$$

Figur 2 zeigt diesbezüglich einen vereinfachten Signalflußplan, aus dem zu sehen ist, wie sich das Signal eines Azimut-Fehlausrichtwinkels $\Delta\psi$ bis hin zu einem Nordgeschwindigkeitsfehler $\Delta V_N$ fortpflanzt.

3

Es ist deutlich zu erkennen, daß bei Vorliegen eines Ausrichtfehlers $\Delta\psi$ der meßbare Ausgang $\Delta V_N$ durch die beiden Integratoren I nicht nur eine zeitverzögerte Reaktion zeigt, sondern daß darüber hinaus die Amplitude dieser Reaktion auch noch von den Blöcken K und C abhängt, welche in ihren Verstärkungsfaktoren durch die situationsbedingten Größen der vorliegenden geographischen Breite $\phi$ sowie der Ostgeschwindigkeit $V_{ost}$ und der Ostbeschleunigung $f_{ost}$ beeinflußt werden.

Die übrigen Bezeichnungen in Figur 2 stellen mit $\omega_e$ die Erddrehrate, mit Re den Erdradius (Entfernung des Fluggerätes zum Erdmittelpunkt) und mit g die Erdbeschleunigung dar, wobei die beiden letzteren Größen ebenfalls leicht veränderlich sein können. Der Block X rechts in Fig. 2 versinnbildlicht das Kompensationsfilter, welches nachfolgend näher beschrieben wird.

Wie bereits erläutert, sind bei der Inbetriebnahme eines "Strap-Down"-Systems (Navigationsgerät) im allgemeinen die Werte der aktuellen Position und Geschwindigkeit bekannt, nicht jedoch die Anfangswerte der Flugzeug-Lagewinkel (Größen $\psi_o$ in Figur 1). Auf Grund dieser Fehlausrichtung wird das Navigationsgerät auch fehlerhafte Geschwindigkeitwerte liefern.

Wie aus Figur 1 weiter zu erkennen ist, besteht die Ausrichtung eines Navigationssystems im Fluge nun darin, die Unterschiede der berechneten Geschwindigkeitssignale des Navigationssystems $\underline{V}_{INS}$ und der tatsächlich vorliegenden, aber rauschbehafteten Geschwindigkeitssignale des "Global Positioning Systems" $\underline{V}_{GPS}$ in Form der Signale $\underline{DV}$ über die zeitabhängige Rückführmatrix $\underline{K}(t)$ derart auf die Integratoren des "Strap-Down"-Systems (Navigationsgerät) zu bringen, daß über den dadurch entstehenden Regelkreis diese Geschwindigkeitsunterschiede $\underline{DV}$ so schnell und so präzise wie möglich zu Null gemacht werden. Die optimale Bestimmung der Rückführmatrix $\underline{K}(t)$ (zeitabhängige Verstärkungsfaktoren des Regelkreises) geschieht dabei z.B. über die Kalman-Filtertheorie oder durch die Methode der nichtlinearen Beobachtung.

Wie im vorherigen Abschnitt bereits erklärt, hängt bei einer Ausrichtung im Fluge gemäß Figur 2 bei Vorliegen einer Anfangs-Fehlausrichtung des Azimutwinkels $\Delta\psi$ der Ausgang $\Delta V_N$ (geographische Nordgeschwindigkeit) des Navigationsgerätes nicht nur von der Zeit, sondern auch von der geographischen Breite $\phi$ sowie von der Ostgeschwindigkeit $V_{ost}$ und der Ostbeschleunigung $f_{ost}$ ab. D.h., die Rückführmatrix $\underline{K}(t)$ müßte ebenfalls nicht nur in Abhängigkeit von t, sondern auch von $\phi$, $V_{ost}$ und $f_{ost}$ optimal berechnet werden, was sowohl für die Kalman-Filterung als auch für die nichtlineare Beobachtung einen beträchtlichen Aufwand bedeuten würde.

Der Grundgedanke zur Verhinderung dieser Schwierigkeiten besteht nun darin, über ein Kompensationsfilter (in Figur 2 mit dem Block X dargestellt) das vom Navigationsgerät gelieferte Signal $\Delta V_N$ derart zu korrigieren, daß das entstehende Signal

$$\widetilde{\Delta V_N}$$

bei Vorliegen von $\Delta\psi$ nur noch von der Zeit abhängig ist. Es wird also gefordert, das Übertragungsverhalten des Kompensationsfilters X so zu berechnen, daß das Gesamtübertragungsverhalten zwischen $\Delta\psi$ und

$$\widetilde{\Delta V_N}$$

dem Übertragungsverhalten eines Integrators entspricht. Im Frequenzbereich kann formuliert werden:

$$\frac{\widetilde{\Delta V_N}\,(p)}{\Delta\Psi\,(p)} = \frac{K/p + C}{p} \cdot X = 1/p \qquad\qquad (2)$$

wobei $p = \sigma \pm j\omega$ die Laplace-Variable bezeichnet und die Werte von K und C aus Figur 2 zu entnehmen sind.

Die Gleichung (2) liefert nun für das dynamische Verhalten des Blockes X die folgende Übertragungsfunktion,

$$X(p) \quad \frac{1}{K/p + C} = \frac{p}{K + Cp}$$

$$= \frac{p/K}{1 + \frac{c}{K}p} = \frac{1}{c}\left(1 - \frac{1}{1+\frac{c}{K}p}\right) \qquad (3),$$

die in Fig. 3 auch als Blockschaltbild dargestellt ist. Es ist zu erkennen, daß es sich bei dem Kompensationsfilter um ein dynamisches System 1. Ordnung handelt.

Dabei sind die Werte von

$$C = f_{ost} \qquad (4)$$

$$K = (\omega_e \cdot \cos \phi + V_{ost}/R_e) \cdot g \qquad (5)$$

zwar von der aktuellen Flugsituation abhängig, aber doch bekannt bzw. einfach zu berechnen ($\omega_e$ ist die Erddrehrate, g die Erdbeschleunigung und $R_e$ der Erdradius bzw., genauer ausgedrückt, die Entfernung vom Flugzeug zum Erdmittelpunkt).

In Figur 3 bezeichnen die Blöcke 1 und 1/C Verstärkungsfaktoren, der Block

$$F(p) = 1/(1 + c/K \cdot p) \qquad (6)$$

kennzeichnet ein Verzögerungsglied 1. Ordnung mit der Zeitkonstante

$$T = C/K \qquad (7).$$

Durch dieses Kompensationsfilter X wurde nun erreicht, daß bei jedweden Flugzuständen die Reaktion

$$\widetilde{\Delta V_N}$$

am Ausgang des Filters nur von der Amplitude der Azimutfehlausrichtung und von der Zeit abhängt (in der Annahme, daß die übrigen Zustände bereits richtig initialisiert sind). Damit können letztendlich auch die optimalen Rückführkoeffizienten einmal für immer nur in Abhängigkeit der Zeit für beliebige sonstige Flugsituation berechnet werden.

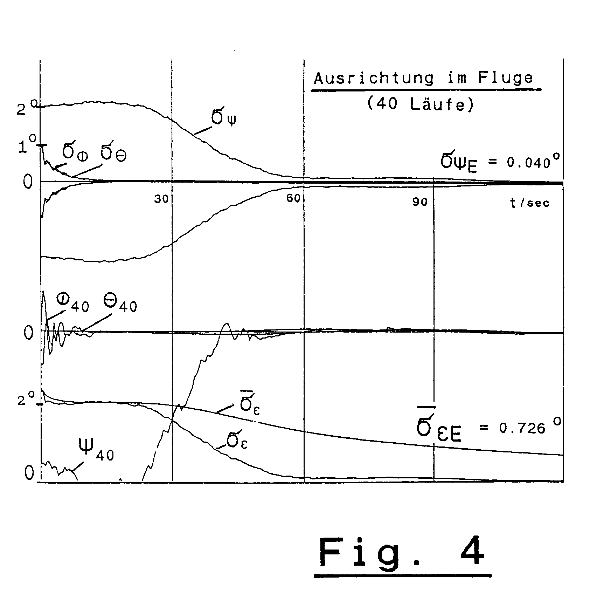

Figur 4 stellt dar, welche Ergebnisse sich bei der Ausrichtung im Fluge eines geläufigen Navigationsgerätes bei Anwendung des oben beschriebenen Kompensationsfilters erzielen lassen. Es wird dabei angenommen, daß die Stützung der Geschwindigkeitsgrößen durch das satellitenbezogene "Global-Positioning-System," (GPS) geschieht.

Bei der Simulation der Ausrichtvorgänge wurden dabei sowohl für das Prozeß-Rauschen (stochastische Fehler der Inertialsensoren - Drehgeschwindigkeits- und Beschleunigungsmesser-) als auch für das Meß-Rauschen (stochastische Fehler des GPS) Werte zugrunde gelegt, die dem heutigen Stand der Technik entsprechen.

Bei der Durchführung der in Figur 4 dargestellten 40 verschiedenen Ausrichtvorgänge im Fluge wurden S-förmige Flugbahnen simuliert, wobei für jeden Flug unterschiedliche Anfangs- und Endkursrichtungen, unterschiedliche Anfangs- und Endgeschwindigkeiten sowie unterschiedliche geographische Breiten berücksichtigt wurden, dies über die Erzeugung von entsprechenden Zufallswerten durch einen Zufallsgenerator.

Für die 40 verschiedenen Flüge ergaben sich dabei zufälligerweise folgende maximalen bzw. minimalen Werte:

Anfangs- und End-Kursrichtungen:

gleichmäßig verteilt zwischen ±180°

Geographische Breite:

$\phi$ max = 71,3°; $\phi$ min = -5,1°

Anfangs- und Endgeschwindigkeiten:

V max = 415 m/sec; V min = 63 m/sec

Beschleunigungen in Ostrichtung:

(kleinste bzw. größte während eines Fluges betragsmäßig maximal auftretende Ostbeschleunigung)

$$( |f_{ost}|_{max} ) \quad max = 39,9 \ m/sec^2; \quad ( |f_{ost}|_{max} ) \quad min = 2,4 \ m/sec^2$$

D.h., bei den 40 verschiedenen Flügen wurde einer durchgeführt, bei dem die betragsmäßig größte Ostbeschleunigung das 4-fache der Erdbeschleunigung betrug. Während eines anderen S-förmigen Fluges ergab sich eine betragsmäßige größte Ostbeschleunigung von nur $\frac{1}{4}$. der Erdbeschleunigung.

Diese o.g. Zahlenwerte dokumentieren, daß beim Test der Brauchbarkeit des Kompensationsfilters über diese 40 verschiedenartigen Ausricht-Simulationsläufe wirklich die unterschiedlichsten Randbedingungen berücksichtigt wurden.

In Figur 4 sind bezüglich der oberen Abzisse über der Zeit von O bis 120 sec die Plus-Minus-Sigmawerte (als Mittelwerte über 40 Simulationsläufe) die Fehler der Rollwinkel ($\sigma_\phi$), Nickwinkel ($\sigma_\theta$) und Gierwinkel ($\sigma_\psi$) aufgetragen. Es ist zu erkennen, daß wie zu erwarten der Gierwinkelfehler (Azimutfehler $\sigma_\psi$) sehr viel langsamer abnimmt als die Horizontierungswinkel $\sigma_\phi$ und $\sigma_\theta$. Nach 2 min. hat die Standardabweichung $\sigma_\psi(t)$ des Azimutfehlers von anfänglichen $\sigma_{\psi o}$ = 2° auf $\sigma_{\psi E}$ = 0,040° abgenommen.

Die Anfangs-Fehlausrichtwinkel zum Zeitpunkt t = 0 (Lagewinkel-Unterschiede zwischen System Flugzeug und Navigationssystem) nach Abschluß der sog. Grob-Ausrichtung wurden entsprechend Literaturhinweisen durch Generierung von Gaussverteilten Zufallszahlen mit einer Standardabweichung von $\sigma_{\phi o}$ = $\sigma_{\theta o}$ = 1° (Horizontierungsfehler) und $\sigma_{\psi o}$ = 2° (Azimutfehler) festgelegt.

Bezüglich der mittleren Abzisse in Figur 4 sind als typisches Beispiel für einen beliebigen Ausrichtvorgang die zeitlichen Fehlerverläufe der letzten, d. h. der 40. Simulationsberechnung dargestellt. Es ist wiederum klar zu erkennen, daß die Horizontierungsfehler $\phi_{40}$ und $\theta_{40}$ innerhalb einer kurzen Zeit von 10 bis 15 sec zu Null gemacht werden können, während der Azimutfehler $\psi_{40}$, ausgehend von einem Anfangsfehler ($\psi_{40}$)$_0$ = -3,5°, erst nach ca. 50 bis 60 sec um Null eingeschwungen ist.

Ganz unten in Figur 4 sind letztendlich zum einen das geometrische Mittel $\sigma_\epsilon(t)$ der genannten Winkelfehler über die betrachteten 40 Simulationsläufe und zum anderen das entsprechende zeitgewichtete geometrische Mittel $\overline{\sigma_\epsilon}(t)$ dieser Fehler aufgetragen. Es ist zu erkennen, daß diese zeitgemittelte Standardabweichung bis zum Ende der Ausrichtung bei t = 120 sec (d.h. 2 min) auf $\sigma_{\epsilon E}$ = 0,726° abfällt, siehe Gl. 8:

$$\overline{\sigma_{\epsilon E}} = \frac{1}{40} \sum_{j=1}^{40} \sqrt{\frac{1}{120 s} \int_0^{120 s} \left[ (\phi_{soll} - \phi_{ist})_j^2 + (\theta_{soll} - \theta_{ist})_j^2 + (\psi_{soll} - \psi_{ist})_j^2 \right] dt} \tag{8}$$

Dieses Kriterium der Gl. 8 stellt die zeit- und amplitudengemittelte Standardabweichung $\overline{\sigma_\epsilon}$ der Winkelfehler $\Delta_\phi(t)$, $\Delta_\theta(t)$, $\Delta_\psi(t)$ während der erwähnten 40 Ausrichtvorgänge nach Ablauf von jeweils 120 sec dar und kann als Maß für die Güte eines Ausrichtverfahrens herangezogen werden.

Diese oben erläuterten Ergebnisse haben dokumentiert, daß bei Einsatz des oben beschriebenen Kompensationsfilters die optimalen zeitabhängigen Rückführkoeffizienten für eine Ausrichtung im Fluge einmal für immer "off-line" berechnet werden können. Im Zusammenwirken mit dem Filter haben dann diese einmalig berechneten zeitabhängigen Rückführkoeffizienten Gültigkeit für optimale Ausrichtvorgänge im Fluge bei beliebigen geographischen Breiten, beliebigen Ostgeschwindigkeiten und beliebigen Ostbeschleunigungen.

Referenzen

| | | |
|---|---|---|
| (1) | G. R. Pitman (Ed.): | "Inertial Guidance", John Wiley, New York, 1962 |
| (2) | K. R. Britting: | "Inertial Navigation Systems Analysis", John Wiley, New York, 1971 |
| (3) | K. D. Joos: | "Inertialnavigation in Strapdown-Technik", Ortung und Navigation, Feb. 1983 |
| (4) | P. G Savage: | "Strapdown System Algorithms", AGARD Lecture Series No. 133, May 1984 |
| (5) | B. Stieler: | "Die Navigationsgleichungen und das Fehlerverhalten von Trägheitsnavigationssystemen", |
| | | IB 153-76/26, DFVLR, Braunschweig, 1976 |
| (6) | V. Krebs: | "Nichtlineare Filterung", R. Oldenbourg Verlag, München, 1980 |
| (7) | H. G. Jacob: | "Rechnergestützte Optimierung statischer und dynamischer Systeme" (Beispiele mit FORTRAN-Programmen), Springer-Verlag, Berlin, 1982 |
| (8) | R. W. Tafel, D. Krasnjanski: | "Rapid Alignment of Aircraft Strapdown Inertial Navigation Systems Using NAVSTAR Global Positioning System", Naval Air Development Center, Warminster, PA, USA |

**Patentansprüche**

1. Inertiales Navigationssystem für ein Fluggerät, dessen Geschwindigkeitssignal ($\underline{V}_{INS}$) im Verwendungsfall mit einem tatsächlichen Geschwindigkeitssignal ($\underline{V}_{GPS}$) verglichen wird, wobei im Verwendungsfall die Geschwindigkeitsabweichung ($\underline{DV}$) über eine Rückführmatrix $\underline{K}$ (t) auf das Navigationssystem rückgeführt wird, um das Koordinatensystem des Navigationssystems in dasjenige des Fluggerätes hineinzudrehen, **dadurch gekennzeichnet,** daß zur Ausrichtung des Navigationssystems im Fluge und zur Kompensation eines aus einer Lage-Fehlausrichtung resultierenden Geschwindigkeitsfehlers im Wege der Rückführung ein Kompensationsfilter (X) angeordnet ist, welches folgende Übertragungsfunktionen aufweist:

$$X_{(p)} = \frac{1}{c} \left( 1 - \frac{1}{1 + \frac{c}{K} p} \right)$$

wobei:

$p = \sigma \pm j\omega$ Laplace - Variable

$C = f_{ost}$ und

$K = (\omega_e \cdot \cos \phi + V_{ost}/R_e) \cdot g$

mit:

$f_{ost}$ = Ostbeschleunigung
$V_{ost}$ = Ostgeschwindigkeit
$\phi$ = geographische Breite
$\omega_e$ = Erddrehrate
$R_e$ = Erdradius (Entfernung zwischen Fluggerät und Erdmittelpunkt) sowie
$g$ = Erdbeschleunigung

**Claims**

1. An inertial navigation system for a flying vehicle the velocity signal ($V_{INS}$) of which at its use is compared to an actual velocity signal ($V_{GPS}$), whereat at its use the velocity deviation ($DV$) is fed back to the navigation system via a return matrix $\underline{K}$ (t) in order to rotate the coordinate system of the navigation system into that one of the flying vehicle, **characterized in that** for aligning of the navigation system during the flight and for compensation of an velocity error resulting from an attitude misalignment a compensation filter (X) is arranged within the feedback branch with said filter having the following transmission function:

$$X_{(p)} = \frac{1}{c} \left( 1 - \frac{1}{1 + \frac{c}{K} p} \right)$$

whereat

$p = \sigma \pm j\omega$ Laplace variable

$C = f_{ost}$ and

$K = (\omega_e \cdot \cos \phi + V_{ost}/R_e) \cdot g$

with
$f_{ost}$ = east-acceleration
$V_{ost}$ = east-velocity
$\phi$ = latitude
$\omega_e$ = rotation rate of the earth
$R_e$ = radius of the earth (distance between flying aggregate and center of earth)
$g$ = acceleration due to gravity

**Revendications**

1. Système de navigation inertiel pour un avion, dont le signal de vitesse ($V_{INS}$) est comparé, dans le cas d'utilisation, à un signal effectif de vitesse ($V_{GPS}$), et dans lequel, dans le cas d'utilisation, l'écart de vitesse ($DV$) est renvoyé par l'intermédiaire d'une matrice de renvoi $\underline{K}$ (t) au système de navigation, pour amener par rotation le système de coordonnées du système de navigation à coïncider avec celui de l'avion, caractérisé par le fait que pour l'alignement du système de navigation en vol et pour la compensation d'une erreur de vitesse qui résulte d'une orientation de position erronée, dans le trajet de renvoi est disposé un filtre de compensation (X), qui possède la fonction de transfert suivante :

$$X_{(p)} = \frac{1}{c} \left( 1 - \frac{1}{1 + \frac{c}{K} p} \right)$$

avec :

$p = \sigma \pm j\omega$ variable de Laplace

$C = f_{ost}$, et

$K = (\omega_e \cdot \cos \phi + V_{ost}/R_e) \cdot g$

avec :
$f_{ost}$ = accélération de déplacement vers l'est

$V_{ost}$ = vitesse de déplacement vers l'est

$\phi$ = largeur géographique

$\omega_e$ = vitesse angulaire terrestre

$R_e$ = rayon terrestre (distance entre l'avion et le centre de la terre), et

g = accélération de la pesanteur.

Fig. 1

$$( \omega_e \cos \varphi + V_{ost} / R_e ) g$$

Fig. 2

Fig. 3

Fig. 4